# EUROPÄISCHE PATENTSCHRIFT

(11) **EP 2 274 192 B1**
(45) Veröffentlichungstag und Bekanntmachung des Hinweises auf die Patenterteilung: **31.10.2018**
(21) Anmeldenummer: 09737888.9
(22) Anmeldetag: 29.04.2009
(51) Int. Cl.: B62B 5/04

(54) **EINRICHTUNG ZUM BETÄTIGEN VON BREMSEINRICHTUNGEN FAHRBARER VORRICHTUNGEN**
UNIT FOR ACTUATING BRAKE SYSTEMS OF TRAVELING DEVICES
SYSTÈME POUR ACTIONNER DES MÉCANISMES DE FREINAGE DE DISPOSITIFS MOBILES

(30) Priorität: 30.04.2008 DE 102008021604
(43) Veröffentlichungstag der Anmeldung: 19.01.2011
(73) Patentinhaber: Fresenius Medical Care Deutschland GmbH, 61352 Bad Homburg (DE)
(72) Erfinder: FAULHABER, Thomas, 97493 Bergrheinfeld (DE)
(74) Vertreter: Bobbert & Partner Patentanwälte PartmbB
(86) Internationale Anmeldenummer: PCT/EP2009/003115
(87) Internationale Veröffentlichungsnummer: WO 2009/132844

(56) Entgegenhaltungen:
- DE-A1- 3 900 312
- DE-U1- 9 315 573
- FR-A- 964 745
- GB-A- 376 845
- JP-U- S54 102 830
- US-A- 2 684 734
- US-A- 2 873 820
- US-A- 5 579 871

## Beschreibung

Die vorliegende Erfindung betrifft eine Einrichtung zum Erzeugen von Zug- und/ oder Druckkraft zum Betätigen von vier Bremseinrichtungen gemäß dem Anspruch 1.
Sie betrifft ferner ein fahrbares Gestell sowie ein medizinisches Gerät gemäß den Ansprüchen 7 und 9.

Aus der Praxis sind fahrbare Gestelle und Vorrichtungen mit bremsbaren Fahrrollen bekannt. Zu solchen Vorrichtungen zählen Container, Möbelstücke, Einkaufswagen, Palettenwagen, Kinderwagen, Kinderbetten, Trolleys, Werkzeugwagen und dergleichen. Aus dem Patienten- bzw. Krankenhausbereich sind beispielsweise Krankenhausbetten, Krankenhausliegen, Infusionsständer, Rollstühle, Behandlungseinrichtungen wie Dialysevorrichtungen und dergleichen mit bremsbaren Fahrrollen bekannt. Die Rollen erlauben es, die mit ihnen ausgestattete Vorrichtung beispielsweise von einem Zimmer in ein anderes Zimmer zu schieben oder zu fahren. Am Zielort können sie durch Bremsen der Fahrrollen gegen ein unbeabsichtigtes Rollen gesichert werden. Die Bremsen können dabei entweder direkt im Bereich der Fahrrolle, beispielsweise mittels einer Fußraste, oder indirekt mittels Mechanismen zur Bremskraftübertragung - üblicherweise werden hierzu Seilzüge oder Druckstangen verwendet - betätigt werden.

Die bekannten Mechanismen zur Bremskraftübertragung, wie beispielsweise jene der US 2,684,734, weisen eine Mehrzahl beweglicher Teile auf, weshalb sie wartungsaufwendig sind. Ferner ist die Justierung der Bremskraft, welche wünschenswerterweise auf alle Fahrrollen gleichzeitig und mit gleicher Bremskraft zentral aufgebracht und wieder gelöst werden können soll, insgesamt recht aufwendig.

Aus der FR 964,745 A ist eine Brems- und Umkehrvorrichtung für Kinderwägen bekannt. Dabei werden durch zwei um einen gemeinsamen Drehpunkt drehbare Hebel zwei Übertragungseinrichtungen zum Bremsen von zwei Rädern betätigt.

Aus der GB 376,845 A sind Verbesserungen in Konstruktion und Anordnung der Teile von Bremsvorrichtungen für Kinderwägen und ähnliche leichte Radfahrzeuge bekannt.

Aus der US 5,579,871 A ist eine Bremsvorrichtung für rollbare Nutzfahrzeuge bekannt.

Aus der DE 39 00 312 A1 ist ein Fahrwerk für eine mobile Röntgeneinrichtung mit einer auf die Laufräder wirkenden, mittels Fußtritthebels betätigbaren Bremsvorrichtung bekannt.

Aus der US 2,873,820 A ist eine Bremsvorrichtung für Radfahrzeuge wie Kinderwägen bekannt.

Aus der DE 93 15 573.5 U1 ist ein Fahrgerät mit einer Bremsvorrichtung bekannt.

Aufgabe der vorliegenden Erfindung ist es, eine weitere Einrichtung zum Bremsen oder Feststellen von vier Fahrrollen einer fahrbaren Vorrichtung vorzuschlagen. Ferner sollen ein mit einer solchen Einrichtung ausgestattetes fahrbares Gestell sowie ein medizinisches Gerät mit einem solchen Gestell angegeben werden.

Die erfindungsgemäße Aufgabe wird gelöst durch eine Einrichtung zum Erzeugen von Zug- und/ oder Druckkraft mit den Merkmalen des Anspruchs 1.

So wird erfindungsgemäß eine Einrichtung zum Erzeugen von Zug- und/ oder Druckkraft zum Betätigen von vier Bremseinrichtungen zum Bremsen oder zum Feststellen von vier Fahrrollen einer fahrbaren Vorrichtung vorgeschlagen. Dabei weist die Einrichtung zwei Hebel auf, welche um einen gemeinsamen Drehpunkt drehbar angeordnet sind. Die Einrichtung weist ferner vier an den Hebeln angeordnete Übertragungseinrichtungen auf, mittels welcher bei einer Drehung des Hebels erzeugte Zug- und/ oder Druckkräfte auf die Bremseinrichtungen übertragen werden können. Die Bremseinrichtungen können dabei zum Abbremsen der Vorrichtung ausgestaltet sein. Sie können insbesondere zum Ausüben einer zunehmenden und/oder einer justierbaren Bremswirkung (i. S. einer im Einzelfall gezielt bestimmbaren Bremswirkung) und/oder veränderbaren und/oder sich verändernden Bremswirkung ausgestaltet sein. Die Bremseinrichtungen können vorzugsweise jedoch auch als Feststellbremsen ausgeführt sein. Die Bremseinrichtungen können ferner als Bremsen mit zusätzlicher Feststelloption ausgestaltet sein.

Der Hebel kann dabei - bspw. mittels einer Aufnahmeeinrichtung für einen Drehzapfen - vorgesehen sein, um einen festen Drehpunkt drehbar angeordnet zu werden. Der feste Drehpunkt kann dabei bezogen auf die fahrbare Vorrichtung, welche mittels der Einrichtung gebremst oder arretiert werden soll, fest im Sinne von feststehend sein.

Der Hebel kann jedoch auch vorgesehen sein, um um einen virtuellen Drehpunkt drehbar oder schwenkbar zu sein.

Der Hebel der erfindungsgemäßen Einrichtung kann bei seinem Gebrauch insbesondere horizontal liegen oder sich zumindest im Wesentlichen in einer horizontalen Ebene bewegen lassen. Dies trägt vorteilhaft zu einer flachen Ausgestaltung der erfindungsgemäßen Einrichtung bei.

Der Hebel kann insbesondere mittig an einem feststehenden Zapfen einer fahrbaren Vorrichtung drehbar lagerbar ausgestaltet oder gelagert sein.

Dabei kann der Zapfen an der Unterseite der mit der erfindungsgemäßen Einrichtung ausgestatteten, fahrbaren Vorrichtung angeordnet sein. Er kann ferner vertikal nach unten ausgerichtet vorgesehen sein.

Mittels der erfindungsgemäßen Einrichtung ist aufgrund der Vorbereitung des Hebels für eine Drehbewegung bei dessen Gebrauch nicht nur eine äußerst flache, platzsparende sondern zugleich einfache, mechanische, wartungsarme oder gar -freie Einrichtung geschaffen. Durch die Möglichkeit, am Hebel mehrere Übertragungseinrichtungen zum Übertragen von bei der Drehung des Hebels entstehender Zug- und/ oder Druckkraft vorzusehen, können mit nur einem bewegten Teil - dem Hebel - vorteilhaft eine Mehrzahl von Bremseinrichtungen gebremst werden.

Da die erfindungsgemäße Einrichtung dabei nur wenige Teile aufweist und dabei noch klein baut, ist die erfindungsgemäße Einrichtung vorteilhaft geeignet, sich auch nachträglich für eine gleichzeitige, zentrale Betätigung von vier Fahrrollen-Bremseinrichtungen montieren zu lassen, selbst wenn hierfür werkseitig an der fahrbaren Vorrichtung nicht eigens Raum vorgesehen wurde (beispielsweise bei niedrigem Abstand zwischen der fahrbaren Vorrichtung und einer Fahrbahnebene).

Die erfindungsgemäße Einrichtung zeichnet sich ferner vorteilhaft dadurch aus, dass die Kraftübertragung unabhängig voneinander auf vier Fahrrollen-Bremseinrichtungen möglich ist. Dies bedeutet, dass selbst wenn eine der beispielsweise als Seilzüge ausgestalteten Übertragungseinrichtungen ihre Funktion verlieren sollte - beispielsweise durch das Reißen eines der Seilzüge - die übrigen Bremseinrichtungen voll funktionsfähig bleiben.

Die erfindungsgemäße Einrichtung zeichnet sich ferner durch ihre besonders kostengünstige Ausgestaltbarkeit und Nachrüstbarkeit aus.

Vorteilhafte Weiterbildungen des erfindungsgemäßen Gegenstandes sind jeweils Gegenstand der Unteransprüche.

So wird erfindungsgemäß eine Einrichtung mit zwei Hebeln vorgeschlagen, welche in entgegen gesetzte Drehrichtungen drehbar sind. Dies ermöglicht bei beispielsweise an den Enden eines jeden Hebels gelagerten Seilzugaufnahmen eine gleichsinnige Betätigung von zwei Bremseinrichtungen jeweils einander diagonal gegenüberliegender und/oder benachbarter Fahrrollen. Dabei kommt es auf die Länge der Seilzüge nicht an. Dies kann an den jeweiligen Anwendungsfall vorteilhaft auf einfachste Weise durch ein entsprechendes Kürzen der Seilzüge auf die gewünschte Länge angepasst werden. Von der Erfindung umfaßt sind jedoch auch Lösungen, bei welchen entsprechende Kräfte nicht mittels Seilzügen oder anderen Zugeinrichtungen, sondern mittels Schubstangen oder anderen Schubeinrichtungen auf die Bremseinrichtungen der Fahrrollen übertragen werden. Zusätzlich sind Kombinationen aus Seilzügen oder anderen Zugeinrichtungen und Schubstangen oder dergleichen zur Übertragung von Zug- und Druckkräften auf jeweils eine oder mehrere Bremseinrichtungen von der Erfindung umfasst.

In einer bevorzugten Ausführungsform der erfindungsgemäßen Einrichtung sind alle Hebel um ein und denselben Drehpunkt - insbesondere einen festen Drehpunkt - drehbar gelagert. Diese Ausgestaltung erübrigt das Vorsehen mehrerer Drehpunkte, was insbesondere bei geringem Platzangebot Vorteile bietet - nicht zuletzt ggf. auch schon bei der Montage der erfindungsgemäßen Einrichtung an der fahrbaren Vorrichtung.

Ist dabei der Drehpunkt fest - beispielsweise bezogen auf die fahrbare Vorrichtung - oder entsprechende zu seiner festen Anordnung dort vorgesehen, so senkt dies wiederum den für die mechanische Lösung erforderlichen Aufwand. Ein feststehender ist zudem weniger wartungsintensiv als ein im Gebrauch bewegter.

In einer weiter bevorzugten Ausführungsform der erfindungsgemäßen Einrichtung weist diese wenigstens eine Einrichtung zum Ausüben von Schub auf wenigstens einen der Hebel auf, um diesen zum Drehen zu veranlassen. Das Vorsehen einer Einrichtung zum Ausüben von Schub dient dabei einer besonders bedienerfreundlichen Betätigung der Einrichtung zum Erzielen von Bremswirkung, beispielsweise durch das Niedertreten eines Pedals. Die Umwandlung der linearen Bewegung (Schub der Einrichtung) in eine Rotationsbewegung (Drehung des Hebels) kann dabei mittels einer Verbindung, insbesondere einer drehbarer ausgestalteten Verbindung, zwischen der Einrichtung zum Ausüben von Schub und dem Hebel erfolgen. Dabei kann Schub beispielsweise mittels einer Schubstange oder eines Schubblechs mit einem vorbestimmten Abstand zu dessen Drehpunkt auf den Hebel aufgebracht werden, woraufhin sich dieser um seinen Drehpunkt dreht.

Zur Erzielung von gegensinnigen Drehbewegungen mehrerer Hebel kann die Einrichtung zum Ausüben von Schub den ersten Hebel in einem ersten Punkt und den zweiten Hebel in einem zweiten Punkt anlenken, wobei der gemeinsame Drehpunkt der beiden Hebel oder - im Falle unterschiedlicher Drehpunkte beide Drehpunkte - in einem Bereich zwischen dem ersten und dem zweiten Punkt liegen können.

Die beiden Hebel können übereinander angeordnet werden, wobei sie kreuz- oder scherenartig zueinander liegen. Sie können zur weiteren Verringerung ihres Platzbedarfs in einer vertikalen Richtung - bezogen auf eine Fahrbahnebene der fahrbaren

Vorrichtung - auch neben- oder hintereinander angeordnet sein. Die Einrichtung zum Ausüben von Schub kann mehrteilig sein.

In einer weiter bevorzugten Ausführungsform der erfindungsgemäßen Einrichtung sind die beiden Hebel um jeweils genau einen Drehpunkt drehbar oder zur Drehbarkeit um genau einen Drehpunkt vorgesehen.

In einer weiter bevorzugten Ausführungsform weist die Einrichtung zum Übertragen der erzeugten Zug- und/ oder Druckkraft wenigstens eine Druckfeder auf. Die Druckfeder kann jeweils derart ausgestaltet und angeordnet sein, dass eine gleichmäßige Bremskraft aller von der erfindungsgemäßen Einrichtung gebremsten Fahrrollen-Bremseinrichtungen sichergestellt ist. Die Fein- bzw. Nachjustierung der Bremskraft kann dabei der einzelnen Druckfeder überlassen bleiben. Die Druckfedern sind hierzu vorzugsweise jeweils an der Seilzugaufnahme des Hebels vorgesehen. Sie können jedoch auch auf der Seite der Bremseinrichtungen der Fahrrollen vorgesehen sein, oder in einem mittleren Bereich der Übertragungseinrichtung (beispielsweise des Seilzugs) zwischen Hebel und Bremseinrichtung.

Die erfindungsgemäße Aufgabe wird auch gelöst durch ein fahrbares Gestell mit den Merkmalen des Anspruchs 7, sowie durch ein medizinisches Gerät mit den Merkmalen des Anspruchs 9. Da hierbei die mittels der erfindungsgemäßen Einrichtung erzielbaren Vorteile ungeschmälert erzielt werden können, wird zur Vermeidung von Wiederholungen an dieser Stelle ausdrücklich auf deren obige Diskussion verwiesen.

Die vorliegende Erfindung wird im Folgenden anhand der beigefügten Zeichnung exemplarisch erläutert. In der Zeichnung, in welcher identische Bezugszeichen gleiche oder ähnliche Bauteile bezeichnen, gilt:
- Fig. 1: zeigt schematisch vereinfacht eine erfindungsgemäße Einrichtung zum Erzeugen von Zug- und/ oder Druckkraft im Zusammenwirken mit vier bremsbaren Fahrrollen in einer vereinfachten Draufsicht;
- Fig. 2: zeigt einen Querschnitt durch eine Fahrrolle mit einer Bremseinrichtung;
- Fig. 3: zeigt die erfindungsgemäße Einrichtung der Fig. 1 in einem ungebremsten Zustand der Bremse;
- Fig. 4: zeigt die Einrichtung der Fig. 3 in einem gebremsten Zustand der Einrichtung;
- Fig. 5: zeigt ausschnittsweise ein Bremspedal mit einer Einrast-Einrichtung;
- Fig. 6: zeigt eine Detailzeichnung eines Ausschnitts einer erfindungsgemäßen Einrichtung;
- Fig. 7: zeigt einen Ausschnitt zweier Hebel einer erfindungsgemäßen Einrichtung zum Erzeugen von Zug- und/ oder Druckkraft;
- Fig. 8: zeigt einen Schnitt entlang der Linie C - C der Fig. 7 und;
- Fig. 9: zeigt eine Dialysemaschine mit einer erfindungsgemäßen Einrichtung.

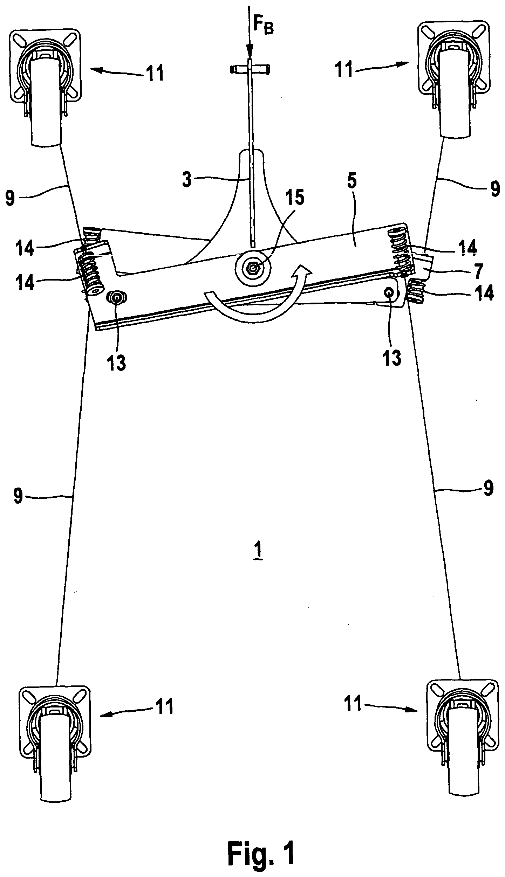

Fig. 1 zeigt eine erfindungsgemäße Einrichtung 1 mit einer Schubstange 3 sowie zwei Hebeln bzw. Kreuzhebeln 5 und 7. Die Einrichtung 1 umfaßt im Beispiel der Fig. 1 vier Übertragungseinrichtungen zum Übertragen der bei einer Drehung der Hebel 5, 7 erzeugten Zugkraft, welche in Fig. 1 als Seilzüge bzw. Bremsseile 9 ausgestaltet sind. Die Bremsseile 9 reichen jeweils von einem Ende eines Hebels 5, 7 zu einer in Fig. 1 nicht dargestellten Bremseinrichtung von Fahrrollen 11.

Die Schubstange 3 wirkt mit den Hebeln 5, 7 über Zapfen 13 zur drehbaren Kopplung der Schubstange mit den Hebeln zusammen. Die Hebel 5 und 7 weisen Druckfedern 14 auf, welche eine automatische Einstellung der mittels der Bremsseile 9 übertragenen Kräfte und damit der Bremswirkung ermöglichen. Diese Einstellung der Bremskraft ist auch bei Verwendung von Bremsstangen anstelle von Bremseilen möglich.

Bei Überleitung einer Bremskraft aus der mit F_{B} markierten Pfeilrichtung mittels der Schubstange 3 und dem Zapfen 13 auf die Hebel 5, 7 werden diese um einen ihren Drehpunkt darstellenden Zapfen 15 im Uhrzeigersinn (Hebel 7) bzw. gegen den Uhrzeigersinn (Hebel 5) gedreht.

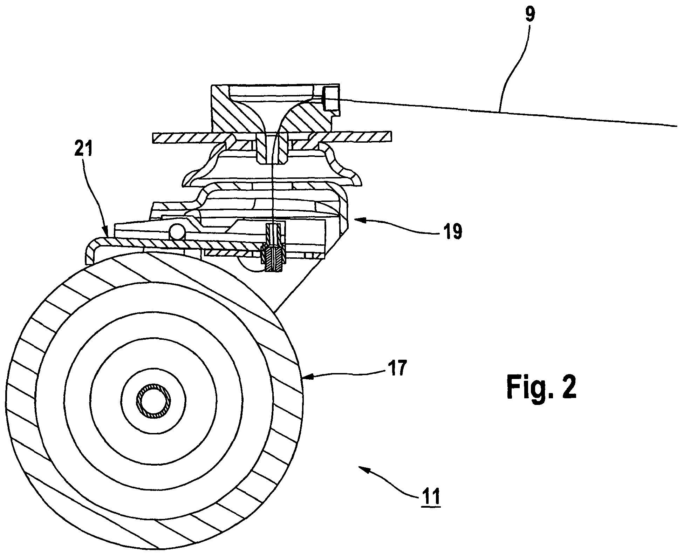

Fig. 2 zeigt einen Schnitt durch eine Fahrrolle 11 mit einer Lauffläche 17, auf welche in dem in Fig. 2 gezeigten Bremszustand der Bremseinrichtung 19 ein Bremshebel 21 mittels Druck wirkt. Dieser Druck ist vom Bremsseil 9 auf die Bremseinrichtung 19 übertragen und löst sich bei nachlassendem Zug auf dem Bremsseil 9. Ein Lösen des Bremshebels 21 von der Lauffläche 17 kann durch eine rückstellende, beispielsweise innerhalb der Bremseinrichtung 19 vorgesehene, Federeinrichtung begünstigt oder gefordert werden.

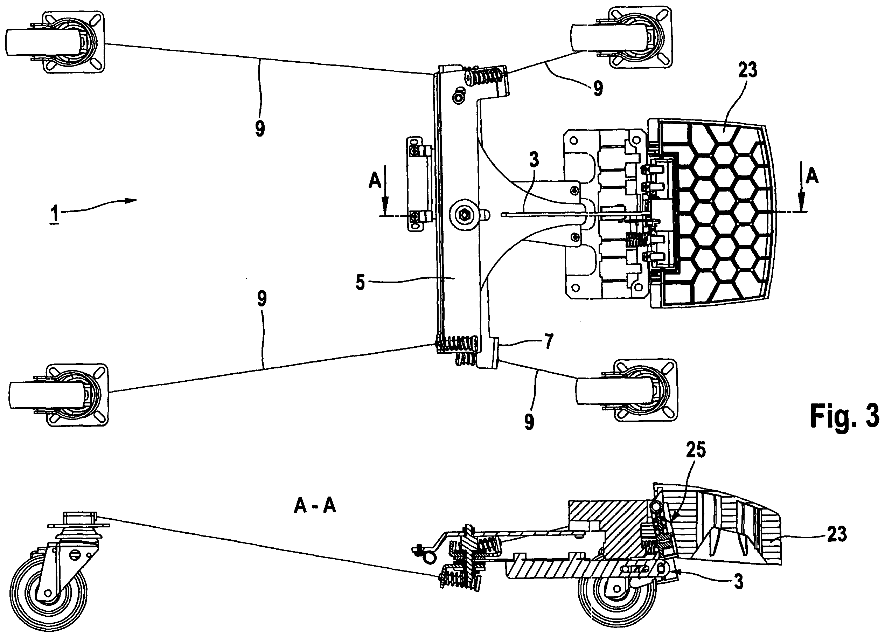

Fig. 3 zeigt die bereits in Fig. 1 gezeigte Einrichtung 1 mit einem Pedal 23 zum Erzeugen der Schubkraft auf die Schubstange 3. Im unteren Bereich der Fig. 3 ist ein Schnitt durch die Linie A-A der Draufsicht des oberen Bereichs der Fig. 3 gezeigt. Ein Zwischenhebel 25 (zwischen Pedal 23 und Einrichtung 1) ermöglicht das Erzeugen der Schubkraft in der in Fig. 1 mit dem Pfeil F_{B} dargestellten Richtung bezogen auf die Einrichtung 1 durch Niedertreten des Pedals 23. Der Zwischenhebel 25 erlaubt dem Pedal 23, mit Hilfe einer Druckfeder bei jeder Betätigung des Pedals 23 in die gleiche Ausgangsposition zu gelangen.

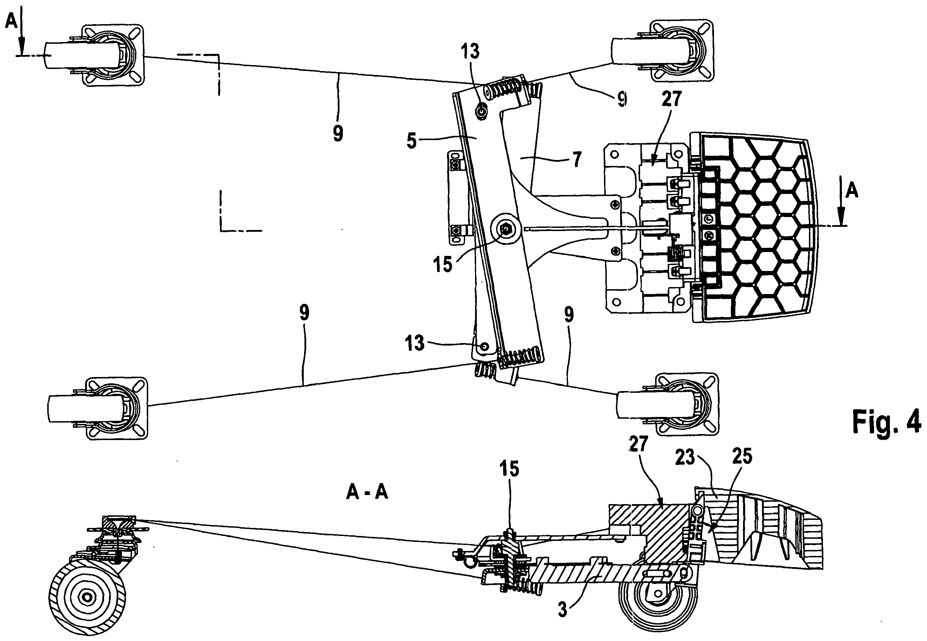

Fig. 4 zeigt die Einrichtung 1 der Fig. 3 im gebremsten Zustand. Gut zu erkennen ist, dass die Hebel 5, 7 nun scherenartig in einem Winkel zueinander stehen und aufgrund ihrer Stellung - bezogen auf den Zapfen 15 - Zug auf die Bremsseile 9 ausüben. Im Vergleich der Querschnitte der Fig. 3 und 4 ist gut zu erkennen, wie durch senkrechten Druck - beispielsweise mit dem Fuß auf das Bremspedal bzw. Pedal 23 - mittels des Zwischenhebels 25 die Schubstange 3 zum linken Bildrand der Fig. 3 und 4 bewegt wird, was aufgrund der Zapfenverbindungen 13 zwischen Schubstange 3 und Hebel 5, 7 zu der in Fig. 4 gezeigten Drehung der Hebel 5, 7 fuhrt. Den Fig. 3 und 4 ist ferner ein Lagerblock 27 zu entnehmen, an welchem das Pedal 23 befestigt ist. Der Lagerblock 27 dient somit der Lagerung der Schubstange 3 und des Pedals 23.

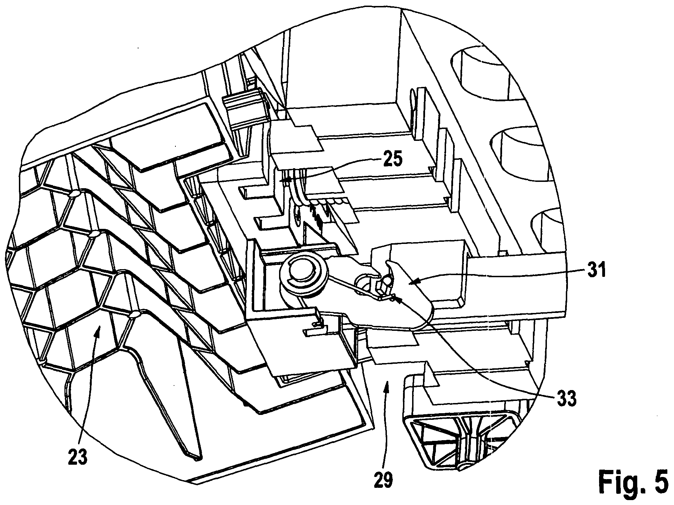

Fig. 5 zeigt eine Einrast-Einrichtung 29 mit einem Rastelement 31, sowie eine am Rastelement 31 vorgesehene Aushebelasche 33. Bei Betätigung des Pedals 23 wird das Rastelement 31 gegen einen Stift gedrückt. Aufgrund der Schräge am Rastelement 31 dreht sich das Rastelement 31 nach unten. Bei Drehrichtungsänderung hakt der sich quer erstreckende Stift in das Rastelement 31 ein und fixiert somit die gebremste Position. Der Zwischenhebel 25 wird mit dem Rastelement 31 in der gebremsten Stellung gehalten. Bei nochmaliger Betätigung des Pedals 23 wird das Rastelement 31 wieder gelöst und der Zwischenhebel 25 kann seine Stellung verändern.

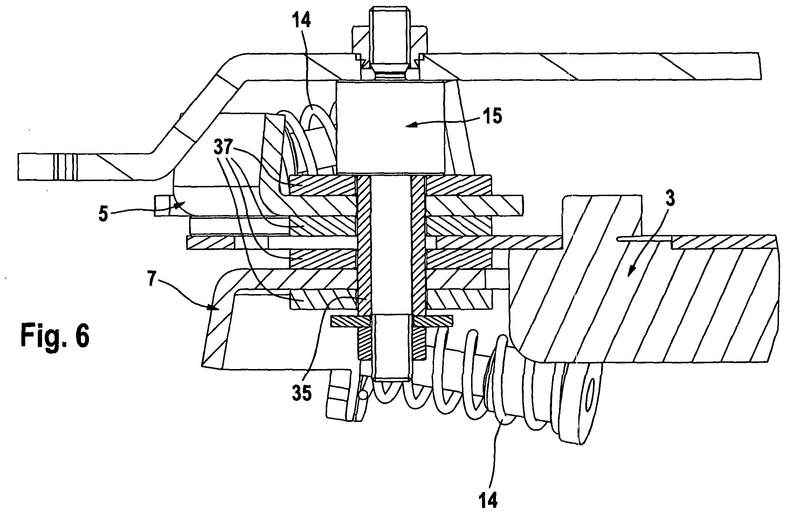

Fig. 6 zeigt einen Schnitt durch eine mögliche Ausführungsform der Hebel 5, 7 im Bereich des Zapfens 15, ihrem Drehpunkt. Den Zapfen 15 umgibt in Abschnitten hiervon eine Lagerhülse 35, welche eine Drehbarkeit unter anderem der Hebel 5, 7 relativ zueinander gewährleistet. In der Darstellung der Fig. 6 sind die Hebel 5, 7 wie auch weitere Elemente mittels Distanzscheiben 37 voneinander beabstandet.

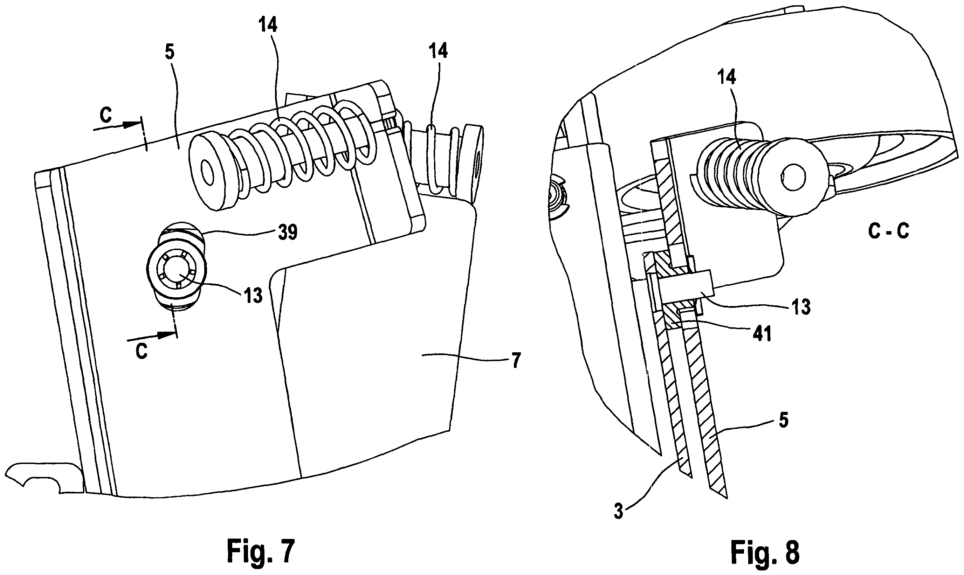

Fig. 7 zeigt Ausschnitte von Hebeln 5, 7 in einer erfindungsgemäßen Ausführungsform der Einrichtung. Der Hebel 5 weist in Fig. 7 eine Öffnung 39 zum Hindurchstecken eines Zapfens 13 zur Verbindung des Hebels 5 mit einer in Fig. 7 nicht gezeigten Schubstange 3 auf.

Fig. 8 zeigt einen Schnitt entlang der Linie C-C der Fig. 7. Der Zapfen 13 ist in einer Lagerhülse 41 gelagert, um eine Relativbewegung zwischen Zapfen 13 und Hebel 5 zu ermöglichen.

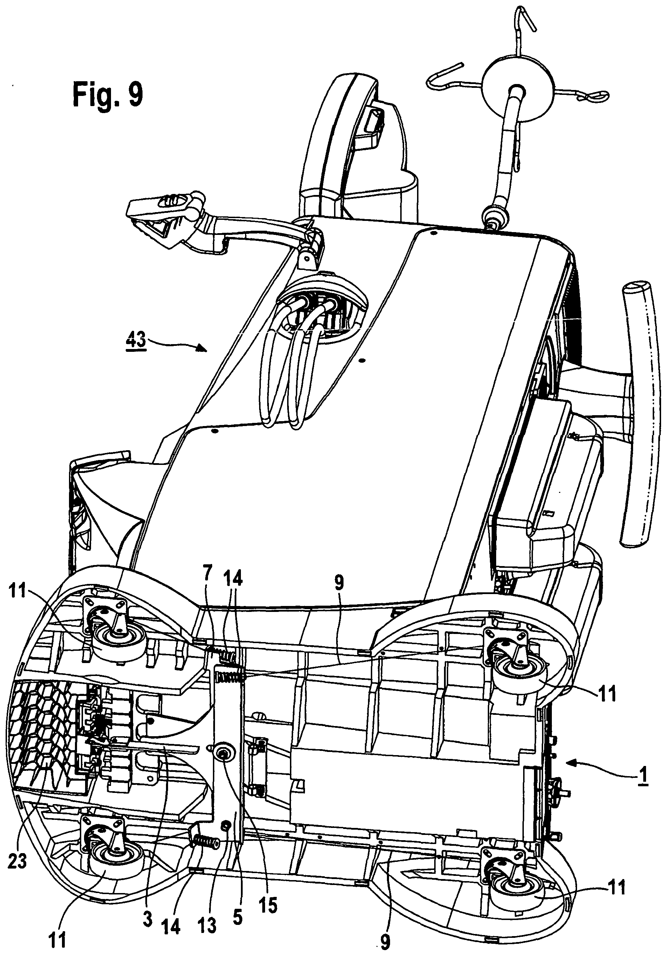

Fig. 9 zeigt eine Dialysemaschine 43 als Beispiel einer medizinischen Vorrichtung mit einer erfindungsgemäßen Einrichtung 1 in einer perspektivischen Ansicht von schräg unten. Fig. 9 zeigt insbesondere Elemente, welche u. a. in den Fig. 1, 3, 4 und 5 bereits gezeigt und in deren oben stehender Diskussion diskutiert sind. Zur Vermeidung von Wiederholungen wird an dieser Stelle daher auf obige Diskussion verwiesen.

## Patentansprüche

1. Einrichtung (1) zum Erzeugen von Zug- und/ oder Druckkraft zum Betätigen von vier Bremseinrichtungen (19) zum Bremsen oder Feststellen von vier Fahrrollen (11) einer fahrbaren Vorrichtung, wobei die Einrichtung (1) aufweist:
zwei um einen gemeinsamen Drehpunkt (15) drehbare Hebel (5, 7); wobei die zwei Hebel (5, 7) in entgegengesetzte Drehrichtungen um den gemeinsamen Drehpunkt (15) drehbar sind; und vier an den Hebeln (5, 7) angeordnete Übertragungseinrichtungen (9) zum Übertragen der bei einer Drehung der Hebel (5, 7) erzeugten Zug- und/ oder Druckkraft auf die vier Bremseinrichtungen (19).

2. Einrichtung (1) nach Anspruch 1 mit wenigstens einer Einrichtung zum Ausüben von Schub auf wenigstens einen der Hebel (5, 7), um diesen zum Drehen um dessen Drehpunkt (15) zu veranlassen.

3. Einrichtung (1) nach Anspruch 2, wobei die Einrichtung zum Ausüben von Schub als Schubstange (3) oder als Schubblech ausgestaltet ist.

4. Einrichtung (1) nach einem der vorangegangenen Ansprüche, wobei die Übertragungseinrichtungen (9) zum Übertragen der erzeugten Zug- und/oder Druckkraft auf die vier Bremseinrichtungen (19) jeweils wenigstens eine Druckfeder (14) aufweisen.

5. Einrichtung (1) nach einem der vorangegangenen Ansprüche, wobei der Drehpunkt (15) ein fester Drehpunkt ist.

6. Einrichtung (1) nach einem der vorangegangenen Ansprüche, wobei beide Hebel (5, 7) um jeweils genau einen Drehpunkt drehbar sind.

7. Fahrbares Gestell mit vier Fahrrollen (11) und wenigstens einer Einrichtung (1) nach einem der vorangegangenen Ansprüche, wobei die Hebel (5, 7) in einer Ebene parallel zur Fahrbahnebene der Fahrrolle (11) drehbar angeordnet sind.

8. Gestell nach Anspruch 7 mit einem Pedal (23) zum Bewirken der Bremswirkung.

9. Medizinisches Gerät mit einem fahrbaren Gestell nach einem der Ansprüche 7 oder 8.

10. Medizinisches Gerät nach Anspruch 9, ausgestaltet als Blutbehandlungsvorrichtung (43).

## Claims

1. A device (1) for generating tensile and/or pressing force to thereby actuate at least four brake means (19) so as to brake or lock four caster wheels (11) of a mobile appliance, said device (1) including:
two levers (5, 7) rotatable about a common fulcrum (15) wherein the two levers (5, 7) are rotatable in opposite directions of rotation about the common fulcrum (15); and
four transmission means (9) disposed at the levers (5, 7) for transmitting the tensile and/or pressing force generated by the rotation of the levers (5, 7) to the four brake means (19).

2. The device (1) according to claim 1 including at least one means for exerting thrust on at least one of the levers (5, 7) so as to cause the latter to rotate about its fulcrum (15).

3. The device (1) according to claim 2, wherein the means for exerting thrust is embodied as a push rod (3) or as a push plate.

4. The device (1) according to any one of the preceding claims, wherein the transmission means (9) for transmitting the generated tensile and/or pressing force to the four brake means (19) include each at least one compression spring (14).

5. The device (1) according to anyone of the preceding claims, wherein the fulcrum (15) is a fixed fulcrum.

6. The device (1) according to anyone of the preceding claims, wherein both levers (5, 7) are rotatable about exactly one fulcrum, respectively.

7. A mobile rack having four caster wheels (11) and at least one device (1) according to any one of the preceding claims, wherein the levers (5, 7) are rotatably disposed in a plane parallel to the running plane of the caster wheel (11).

8. The rack according to claim 7, having one pedal (23) for bringing about the braking effect.

9. Medical apparatus including a mobile rack according to any one of claims 7 to 8.

10. Medical apparatus according to claim 9 embodied as a blood treatment apparatus (43).

## Revendications

1. Dispositif (1) pour générer une force de traction et / ou de compression prévu pour actionner quatre dispositifs de freinage (19) afin de freiner ou de bloquer quatre roues (11) d'un appareil mobile, dans lequel le dispositif (1) comprend:
deux leviers rotatifs (5,7) prévus pour pivoter atour d'un point de pivot (15) commun, où les deux leviers (5,7) peuvent pivoter autour du point de pivot (15) commun dans des directions de rotation opposées; et
quatre dispositifs de transmission (9) disposés sur les leviers (5, 7) prévus pour transmettre la force de traction et / ou de compression générée(s) par une rotation des leviers (5, 7) aux quatre dispositifs de freinage (19).

2. Dispositif (1) selon la première revendication comprenant au moins un dispositif pour exercer une poussée sur au moins l'un des leviers (5, 7) afin de le faire tourner autour de son point de pivot (15).

3. Dispositif (1) selon la revendication 2, dans lequel le moyen pour exercer la poussée est une bielle (3) ou une plaque de poussée.

4. Dispositif (1) selon l'une quelconque des revendications précédentes, dans lequel les moyens de transmission (9) prévus pour transmettre la force de traction et / ou de compression générée(s) aux quatre dispositifs de freinage (19) comprennent chacun au moins un ressort de compression (14).

5. Dispositif (1) selon l'une quelconque des revendications précédentes, dans lequel le point de pivot (15) est un point de pivot fixe.

6. Dispositif (1) selon l'une quelconque des revendications précédentes, dans lequel les deux leviers (5, 7) peuvent chacun pivoter autour d'exactement un point de pivot.

7. Cadre mobile avec quatre roues (11) et au moins un moyen (1) selon l'une quelconque des revendications précédentes, dans lequel les leviers (5, 7) sont agencés de manière à pouvoir pivoter dans un plan parallèle au plan de la trajectoire de la roue (11).

8. Cadre selon la revendication 7 avec une pédale (23) pour engendrer l'effet de freinage.

9. Appareil médical avec un cadre mobile selon l'une quelconque des revendications 7 ou 8.

10. Appareil médical selon la revendication 9 sous forme d'appareil de traitement du sang (43).
